# EUROPEAN PATENT APPLICATION

(11) **EP 2 555 021 A1**
(43) Date of publication of application: **06.02.2013**
(21) Application number: 11762481.7
(22) Date of filing: 04.03.2011
(51) Int. Cl.: G02B 5/08, F24J 2/10

(54) **FILM MIRROR FOR GENERATION OF SOLAR POWER, PROCESS FOR PRODUCTION OF FILM MIRROR FOR GENERATION OF SOLAR POWER, AND REFLECTING DEVICE FOR GENERATION OF SOLAR POWER**

(30) Priority: 27.03.2010 JP 2010073925
(71) Applicant: Konica Minolta Advanced Layers, Inc., Hachioji-shi, Tokyo (JP)
(72) Inventor: MOCHIZUKI Makoto, Hino-shi 191-8511 Tokyo (JP)
(74) Representative: Henkel, Breuer & Partner
(86) International application number: PCT/JP2011/055049
(87) International publication number: WO 2011/122241

(57) **Abstract**

Disclosed are: a flm mirror for use in the generation of a solar power, in which the reduction in a regular reflection factor (which is caused by the deterioration in an adhesive layer arranged on a side opposite to the light incidence side of a reflective layer) can be prevented, and which is lightweight, has excellent flexibility, light resistance and weather resistance and also has a good regular reflection factor to solar light; a process for producing the film mirror; and a reflecting device for use in the generation of a solar power, which comprises the film mirror. The film mirror for use in the generation of a solar power is characterized by comprising: a silver alloy reflective layer which can reflect light having a wavelength of 320 nm at a reflectivity of 39% or more and contains a typical metal element or a transition metal element in an amount of 0.1 to 10 mass % inclusive; or both a silver layer and a reflective layer which is laminated on a side opposite to the light incidence side of the silver layer at a thickness of 5 nm to 50 µm inclusive, can reflect light having a wavelength of 320 nm at a reflectivity of 39% or more, and comprises a typical metal element or a transition metal element. The mirror film is also characterized by additionally comprising an adhesive layer which is arranged on a side opposite to the light incidence side of the silver alloy reflective layer or the reflective layer and is to be adhered onto the substrate.

## Description

### TECHNICAL FIELD

The present invention relates to a novel film mirror for solar heat power generation and a method of manufacturing the same, and a reflection device for solar heat power generation, equipped with the same.

### BACKGROUND

In recent years, as alternative energy by which fossil fuel energy such as petroleum, natural gas or the like might be replaced, attention has recently been focused on coal energy, biomass energy, nuclear energy, and natural energy such as wind power energy, solar energy or the like, but it would appear that natural energy in large quantity, which is most stable as the alternative energy by which fossil fuel energy is to be replaced is solar energy. However, the solar energy is to be dominant alternative energy, but in view of ulilization thereof, there would appear a problem such that (1) energy density of solar energy is low, and (2) the solar energy is difficult to be stored and transported.

In relation to the above-described problem of solar energy, it is proposed that the problem concerning low energy density of solar energy is solved by collecting solar energy with a giant reflection device. A mirror made of glass has been conventionally utilized for a reflection device, since the reflection device is exposed to UV radiation and heat from sunlight, weather, sand storm or the like. There was a problem such that the plant construction was costly because the mirror made of glass exhibited high durability against the environment, but was damaged at the time of transportation, and a mount where the mirror was placed should be strengthened since the mirror made of glass was heavy.

As a means to solve the above-described problem, a method by which a mirror made of glass is replaced by a reflection sheet made of a resin (refer to Patent Document 1, for example). However, it is difficult to employ the mirror made of glass as a minor for solar light reflection simply by replacing the mirror made of glass with a reflection sheet made of a resin (hereinafler, referred to also as a film mirror). It is because not only high reflectance, but also high durability and high regular reflectance are desired for the mirror for solar light reflection.

First, in order to achieve high reflectance, it appears that silver exhibiting high reflection performance in the visible region is used for a reflection layer. However, in the case of a film mirror in which a silver reflection layer was provided, it was confirmed that a sticky adhesive layer provided for attaching a film mirror onto a support was deteriorated, resulting in generation of peeling and strain of the sticky adhesive layer. Since a resin substrate is used in a film mirror, the film mirror has lower stiffness than that of a mirror made of glass, and there appears a problem such that regular reflectance largely drops because of peeling and strain of the sticky adhesive layer.

From the viewpoint of obtaining high reflectance together with light resistance in order to collect sunlight, disclosed is a method by which decline of light transmittance of a resin layer caused by discoloration generated via degradation of a resin exposed to UV rays is suppressed by adding a large amount of a benzotriazole based UV absorbent (hereinafter, referred to also as a UV absorbent) into a resin layer situated on the incident light side beyond a silver reflection layer (refer to Patent Document 2, for example). However, in cases where the above-described mirror was used for the purpose of collecting sunlight, light resistance thereof was not sufficient and it was difficult to suppress the decline of the above-described regular reflectance.

Further, in Patent Document 3, disclosed is a method by which the decline of reflectance caused by silver corrosion is suppressed by laminating a copper layer as an anticorrosion layer provided under a silver layer.

However, after all, the decline of regular reflectance of a film mirror caused by peeling and stain of a sticky adhesive layer could not be sufficiently suppressed, even though employing a technique described in Patent Document 3. Thus, this results in decline of a power generation efficiency, whereby prompt improvement thereof has been demanded.

### PRIOR ART DOCUMENT

### PATENT DOCUMENT

Patent Document 1: Japanese Patent O.P.I. (Open to Public Inspection) Publication No. 2005-59382
Patent Document 2: U.S. Patent No. 7,507,776 B2
Patent Document 3: Published Japanese translation of PCT international Publication No. 2009-520174

### DISCLOSURE OF THE INVENTION

### PROBLEMS TO BE SOLVED BY THE INVENTION

The present invention has been made on the basis of the above-described problem, and it is an object of the present invention to provide a film mirror for solar heat power generation, wherein the film mirror suppresses a decline of regular reflectance caused by degradation of a sticky adhesive layer provided on the side opposite to the light incidence side of a reflection layer; is lightweight and flexible; exhibits excellent light resistance and weather resistance; and has excellent regular reflectance with respect to sunlight, and to provide a method of manufacturing the film mirror and a reflection device for solar heat power generation, fitted with the film mirror.

### MEANS TO SOLVE THE PROBLEMS

After considerable effort during intensive studies on the basis of the above-described problem, the inventor has found out that degradation of a sticky adhesive layer constituting a film mirror for solar heat power generation is originated by decomposition of a law molecular weight component in a resin contained in the sticky adhesion layer, a residual polymerization initiator or a residual monomer, caused by UV radiation. It was also found out that UV rays to degrade each component described above are specifically light in the wavelength of 290 - 330 nm.

Such a problem specifically becomes apparent when using silver for a reflection layer. Silver exhibits superior reflectance in the visible light region to that of metal such as aluminum or the like. However, silver can not reflect but transmit light specifically in the wavelength of 290 - 330 nm. Accordingly, conventionally, when taking account of degradation caused by UV radiation, degradation of a layer present on the light incidence side of a reflection layer should have been taken into consideration, but when using a silver reflection layer, the foregoing item has not yet been sufficient, and it is found out that degradation of a layer on the side opposite to the reflection layer, caused by light in the wavelength of 290 - 330 nm passing through the silver reflection layer should be suppressed.

Then, after intensive studies were made, it was confirmed that a method of forming a copper layer provided under an organic UV absorbent and silver was insufficient to cut off light in the wavelength range of 290 - 330 nm. Further, when an organic UV absorbent exhibited absorption with respect to light in the wavelength range of 290 - 330 nm, it was found out that not only produced was a problem such that a UV absorptive function was gradually decreased via degradation of the organic UV absorbent, and decomposition of the above-described sticky adhesive layer was produced, resulting in a decline of regular reflection, but also the decline of regular reflection was produced via coloration caused by alteration of an organic UV absorbent itself, deformation of a layer in which a UV absorbent was added, or the like.

Then, after further intensive studies were made, it was found out that when providing a silver alloy reflection layer comprising silver as a main component, and a main group metal element or transition metal element having a reflectance of 39% or more at a light wavelength of 320 nm in an amount of 0.1 - 10% by weight, or a reflection layer comprising a silver layer and laminated on a side opposite to an incident light side of the silver layer, sufficient reflection became possible with respect to the wavelength range of 290 - 330 nm, and degradation of a sticky adhesive layer was able to be suppressed, whereby this not only suppressed a decline of regular reflectance but also contributed improvement of power generation efficiency.

The above-described object of the present invention is accomplished by the following structures.
(Structure 1) A film mirror for solar heat power generation comprising:
   a silver alloy reflection layer comprising silver as a main component, and a main group metal element or transition metal element having a reflectance of 39% or more at a light wavelength of 320 nm in an amount of 0.1 - 10% by weight; or a reflection layer comprising a silver layer and laminated on a side opposite to an incident light side of the silver layer, a 5 - 50 nm thick layer comprising a main group metal element or transition metal element having a reflectance of 39% or more at a light wavelength of 320 nm, the film mirror having a structure in which a support is attached onto a sticky adhesive layer provided on a side opposite to the incident light side of the silver alloy reflection layer or the reflection layer.
(Structure 2) The film mirror of Structure 1, wherein the main group metal element comprises Al.
(Structure 3) The film mirror of Structure 1, wherein the transition metal element comprises Ni, Rh, Pt or Zn.
(Structure 4) The film mirror of Structure 2, wherein the silver alloy reflection layer comprises an alloy of the Al and silver.
(Structure 5) The film mirror of Structure 2, wherein the reflection layer comprises a laminate in which an Al layer is laminated on a side opposite to the incident light side of the silver layer.
(Structure 6) The film mirror of Structure 3, wherein the silver alloy reflection layer comprises an alloy of silver and one selected from the group consisting of Ni, Rh, Pt, Cr and Zn.
(Structure 7) The film mirror of Structure 3, wherein the reflection layer comprises a laminate in which an Ni, Rh, Pt, Cr or Zn layer is laminated on a side opposite to the incident light side of the silver layer.
(Structure 8) A method of manufacturing the film mirror of any one oaf Structures 1 - 7, comprising the step of forming a silver alloy reflection layer or a reflection layer via evaporation.
(Structure 9) A reflection device for solar heat power generation comprising a metal support and the film mirror of any one of Claims 1 - 7 provided on the metal support via the sticky adhesive layer.

### EFFECT OF THE INVENTION

The present invention can realize a film mirror for solar heat power generation capable of maintaining high regular reflectance for a long duration with no degradation of a sticky adhesion layer, even though the film mirror for solar heat power generation is used under an extreme environment. It appears that this is obtained via the effect produced by providing a silver alloy reflection layer possessing silver as a main component, and a main group metal element or transition metal element having a reflectance of 39% or more at a light wavelength of 320 nm in an amount of 0.1 - 10% by weight; or a reflection layer possessing a silver layer and laminated on a side opposite to an incident light side of the silver layer, a 5 - 50 nm thick layer comprising a main group metal element or transition metal element having a reflectance of 39% or more at a light wavelength of 320 nm.

### BRIEF DESCRIPTION OF THE DRAWINGS

Fig. 1 is a schematic cross-sectional view showing an example of a structure of a film mirror for solar heat power generation of the present invention.
Fig. 2 is a schematic cross-sectional view showing another example of a structure of a film mirror for solar heat power generation of the present invention.
Fig. 3 is a graph showing the relationship between metal film reflectance and wavelength.

### DESCRIPTION OF THE PREFERRED EMBODIMENTS

Next, embodiments of the present invention will be described in detail, but the present invention is not limited thereto.

After considerable effort during intensive studies, the inventor confirmed that a problem such as a decline of regular reflectance of a film mirror caused by peeling and deformation of a sticky adhesive layer was solved by using a film mirror for solar heat power generation, possessing a silver alloy resection layer containing silver as a main component, and a main group metal element or transition metal element having a reflectance of 39% or more at a light wavelength of 320 nm in an amount of 0.1 - 10% by weight; or a reflection layer comprising a silver layer and laminated on a side opposite to an incident light side of the silver layer, a 5 - 50 nm thick layer containing a main group metal element or transition metal element having a reflectance of 39% or more at a light wavelength of 320 nm, the film mirror having a structure in which a support is attached onto the sticky adhesive layer provided on a side opposite to the incident light side of the silver alloy refection layer or the reflection layer.

It would appear that this is originated by the fact that metal mixed in silver, or a metal (reflection) layer on which a silver (reflection) layer is laminated reflects UV radiation in the wavelength range of 290 - 330 nm, and suppresses decomposition of a low molecular weight component of a sticky adhesive layer, a residual polymerization and a residual monomer.

Silver layer (silver film) does not exhibit high reflection in this wavelength range, and since UV radiation in the wavelength range of 290 - 330 nm can be reflected by selecting a metal layer having a light reflectance of 39% or more in the wavelength range of 320 nm to mix it with silver and to prepare an alloy layer, and by laminating the metal layer onto the silver layer, a silver alloy reflection layer, or a reflection layer in which a metal (reflection) layer is laminated onto a silver layer can suppress decomposition of the low molecular weight component of the sticky adhesive layer, the residual polymerization and the residual monomer.

In addition, reflectance of main group metal or transition metal means regular Reflectance at 5° of a sample obtained by forming a 100 nm thick main group metal or transition metal onto a flat glass plate (BK7) via vacuum evaporation.

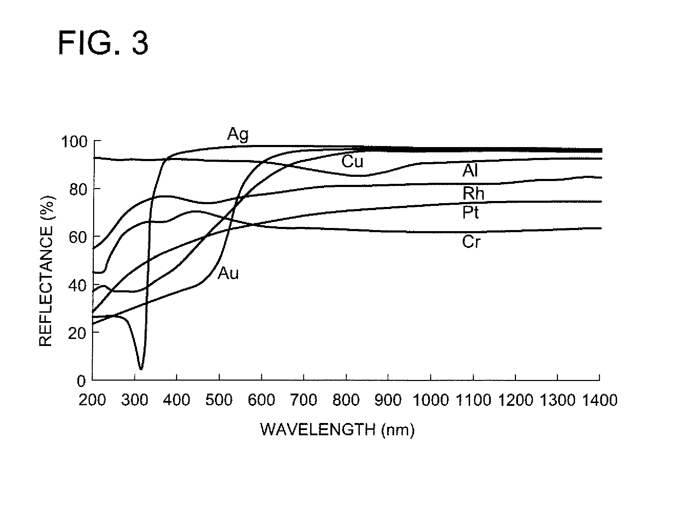

A graph showing the relationship between wavelength and reflectance of each metal film which has been measured by this method is shown in Fig. 3.

As main group metal elements each constituting a metal layer having a light reflectance of 39% or more at a wavelength of 320 nm, which has been measured by this method, provided can be the after-mentioned elements, but Al is preferable, Further, as transition metal elements, after all, provided can be the after-mentioned elements, but Ni, Rh, Pt, Cr, Zn and so forth are preferable.

This metal (reflection) layer maybe laminated on a silver layer to form a reflection layer, or 0.1 % by weight or more of this main group metal element or transition metal element may be contained in silver to form a silver alloy reflection layer.

When forming the silver alloy reflection layer via a mixing process, the desired mixing amount varies depending on metal elements to be used, but a content of 0.1 -10% by weight may be mixed to improve reflectance at a light wavelength of 320 nm. In the present invention, "silver as a main component" means that a content of silver is 90 - 99.9% by weight. When making silver to be a main component, reflection at a light wavelength of around 320 nm is possible to be enhanced with metal to be mixed, while maintaining high reflectance with respect to visible light as an original property of silver.

Next, specific structural examples each of a film mirror for solar heat power generation will be described referring to a figure.

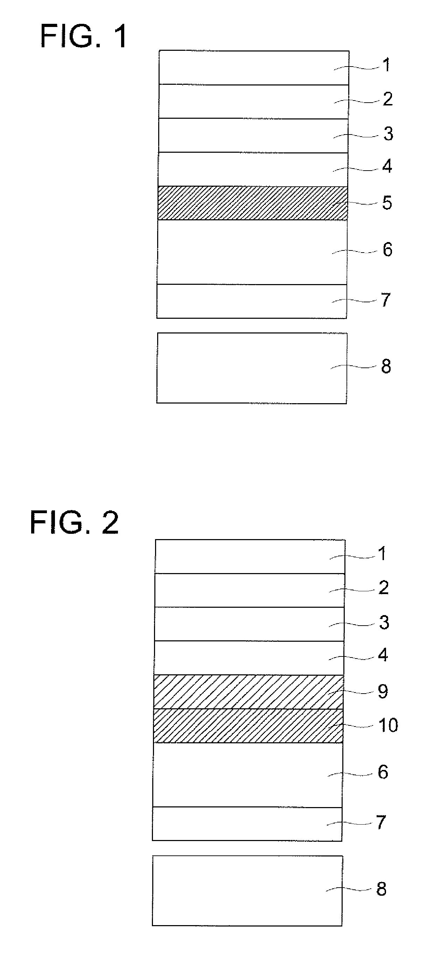

An example of a typical structure of a film mirror for solar heat power generation is shown with a cross-sectional view in Fig. 1.

A film mirror for solar heat power generation shown in Fig. 1 is a silver alloy reflection layer type film mirror for solar heat power generation in which a silver alloy reflection layer is provided, and has a structure in which hard coat layer 1, UV absorption layer 2, adhesion layer 3, corrosion inhibiting layer 4, silver alloy reflection layer 5, resin support layer 6, and sticky adhesive layer 7 are laminated in this order from the incident light side.

A cross-sectional view of a metal-laminated reflection layer type structure as another example of a typical structure of a film mirror for solar heat power generation of the present invention is shown in Fig. 2, and hard coat layer 1, UV absorption layer 2, adhesion layer 3, corrosion inhibiting layer 4, silver reflection layer 9, metal reflection layer 10, resin support layer 6, and sticky adhesive layer 7 are laminated in this order from the incident light side.

In addition, in Figs. 1 and 2, numeral 8 represents another substrate, and in cases where it is used as a reflection device for solar heat power generation, for example, a film mirror for solar heat power generation of the present invention is attached onto a substrate such as a metal support or the like via a sticky adhesive layer.

Next, each of constituting elements of the film mirror for solar heat power generation of the present invention will be described in detail.

### [Hard coat layer]

A hard coat layer as an outermost layer can be produced in a film mirror for solar heat power generation of the present invention. The hard coat layer relating to the present invention is provided for protection to scratches.

Examples of binders which can constitute the hard coat layer relating to the present invention include acrylic resins, urethane based resins, melamine based resins, epoxy based resins, organosilicate compounds, silicone based resins and so forth. Specifically, silicone based resins and acrylic resins are preferable in view of hardness, durability and so forth. Further, actinic energy radiation curable type acrylic resins or thermally curable type acrylic resins are preferably used in view of hardenability, flexibility and productivity.

An actinic energy radiation curable type acrylic resin or a thermally curable type acrylic resin means a composition containing polyfunctional acrylate, acrylic oligomer or a reactive diluent as a polymerization-curable component. In addition, one containing a photoinitiator, photosensitizing agent, a thermal polymerization initiator, a modifier or the like may be used, if desired.

The acrylic oligomer means not only those each in which a reactive acrylic group is bonded to an acrylic resin skeleton, but also those such as polyester acrylate, urethane acrylate, epoxy acrylate, polyether acrylate and so forth. Further usable can be those each in which an acrylic group is bonded to a rigid skeletone such as melamine, isocyanuric acid or the like.

Further, the diluent serves as a solvent in a coating step, which is used as a medium for a coating agent, and the reactive diluent itself has a group reacted with monofunctional or polyfunctional acrylic oligomer and one which becomes a copolymeric component of a coating film.

Examples of Commercially available polyfunctional acrylic coating material include "DIABEAM Series" produced by Mitsubishi Rayon Co., Ltd., "DENACOL Series" produced by NAGASE & Co., Ltd., "NK Ester Series" produced by Shin-Nakamura Chemical Co., Ltd., "UNIDIC Series" produced by DIC Corp., "ARONIX Series" produced by TOAGOSEI Co., Ltd., "BLEMMER Series" produced by NOF Corp., "KAYARAD Series" produced by NIPPON KAYAKU Co., Ltd., "LIGHT ESTER Series" produced by KYOEISHA CHEMICAL Co., Ltd., "LIGHT ACRYLATE Serves" produced by KYOEISHA CHEMICAL Co., Ltd., and so forth.

Each of various additives can be further blended in a hard coat layer relating to the present invention, if desired, so as not to deteriorate the effect of the present invention. For example, usable examples thereof include an antioxidant, a light stabilizer, a stabilizer such as a UV absorbent or the like, a surfactant, a smoothing agent, an antistatic agent and so forth.

When coating a hard coat layer, it is effective to use the smoothing agent in order to reduce irregularities on the roughened surface. A dimethyl polysiloxane - polyoxy alkylene copolymer (SH 190, produced by Dow Corning Toray Co., Ltd., for example) is preferable as a silicone base smoothing agent for the smoothing agent.

### [UV absorption layer]

The UV absorption layer relating to the present invention is composed of one in which a UV absorbent is contained in a resin or inorganic oxide.

Further, the UV absorption layer may be a layer in which an organic UV absorbent is contained; may be a layer in which an inorganic UV absorbent is contained; may be a layer in which both an inorganic UV absorbent and an organic UV absorbent are contained; or may be a configuration in which each of an inorganic UV absorbent-containing layer containing an inorganic UV absorbent and an organic UV absorbent-containing layer containing an organic UV absorbent is independently present.

### <Binder resin containing UV absorbent>

As another example of a UV absorbent relating to the present invention, exemplified is a film in which UV absorbent particles are dispersed in each of commonly known various resins. Examples of the resin film as a substrate include a cellulose ester based film, a polyester based resin, a polycarbonate based film, a polyarylate based film, polysulfone (including polyether sulfone) based film, a polyester film such as polyethylene terephthalate, polyethylene naphthalate or the like, a polyethylene film, a polypropylene film, cellophane, a cellulose diacetate film, a cellulose triacetate film, a cellulose acetate propionate film, a cellulose acetate butylate film, a polyvinylidene chloride film, a polyvinyl alcohol film, an ethylene vinyl alcohol film, a syndiotactic polystyrene based film, a polycarbonate film, a norbornene based resin film, a polymethyl pentene film, a polyether ketone film, a polyether ketone imide film, a polyamide film, a fluorine resin film, a nylon film, a polymethyl methacrylate film, an acrylic film and so forth. Of these, a polycarbonate based film, a polyester based film, a norbornene based resin film and a cellulose ester based film are preferable.

Specifically, it is preferred to use an acrylic film. Further, the film amay be a film prepared via melt-casting film formation, or may be a film prepared via solution casting film formation.

### <Inorganic oxide>

As an example of a UV absorption layer relating to the present invention, provided is a configuration in which UV absorbent particles are dispersed in organic oxide. As inorganic oxide, preferably used are those formed from sol obtained by using an organometallic compound as raw material via local heating. Accordingly, it is preferred to be oxide of an element such as silicon (Si), aluminum (Al), zirconium (Zr), titanium (Ti), tantalum (Ta), zinc (Zn), barium (Ba), indium (In), tin (Sn), niobium (Nb) or the like contained in the organometallic compound.

For example, silicon oxide, aluminum oxide, zircon oxide and so forth are exemplified, but silicon oxide is preferable.

In the present invention, preferably usable examples of a method of forming inorganic oxide from an organometallic compound include a so-called sol-gel method and a method of coating polysilazane.

### <Organic UV absorbent>

Benzophenone based UV absorbents, benzotriazole based UV absorbents, phenyl salicylate based UV absorbents, triazine based UV absorbents, and so forth are exemplified as organic UV absorbents.

Examples of benzophenone based UV absorbents include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2, 2'-dihydroxy-4-methoxy-benzophenone, 2,2'-dihydroxy-4,4'-dimethoxy-benzophenone, 2,2',4,4'-tetrahydroxy-benzophenone, and so forth.

Examples of benzotriazole based UV absorbents include 2-(2'-hydroxy-5-methylphenyl) benzotriazole, 2-(2'-hydroxy-3' 5'-di-t-butylphenyl) benzotriazole, 2-(2'-hydroxy-3'-t-butyl-5'-methylphenyl) benzotriazole, and so forth.

Examples of phenyl salicylate based UV absorbents include phenyl salicylate, 2-4-di-t-butylphenyl-3,5-di-t-butyl-4-hydroxybenzoate, and so forth. Examples of hindered amine based UV absorbents include bis (2,2,6,6-tetramethyl piperidine-4-yl) sebacate, and so forth.

Examples of triazine based UV absorbents include 2,4-diphenyl-6-(2-hydroxy-4-methoxyphenyl)-1,3,5-triazine; 2,4-diphenyl-6-(2-hydroxy-4-ethoxyphenyl)-1,3, 5-triazine, 2,4-diphenyl-(2-hydroxy-4-propoxyphenyl)-1,3,5-triazine; 2,4-diphenyl-(2-hydroxy4-butoxyphenyl)-1, 3,5-triazine; 2,4-diphenyl-6-(2-hydroxy-4-butoxyphenyl)-1,3,5-triazine; 2,4-diphenyl-6-(2-hydroxy-4-hexyloxyphenyl)-1, 3, 5-triazine; 2, 4-diphenyl-6-(2-hydroxy-4-octyloxyphenyl)-1,3,5-triazine; 2, 4-diphenyl-6-(2-hydroxy-4-dodecyloxyphenyl)-1,3,5-triazine, 2, 4-diphenyl-6-(2-hydroxy-4-benzyloxyphenyl)-1,3,5-triazine; and so forth.

### <Inorganic UV absorbent>

The inorganic UV absorbent of the present invention means mainly a metal oxide pigment, and is a compound having a function of making light transmittance to be 10% or less in the UV-B range (a wavelength of 290 - 320 nm) at a film thickness of 6 µm by dispersing it in an acrylic resin in a concentration of 20% by weight or more. As UV absorbents applicable for the present invention, preferably selected are zinc oxide, iron oxide, zirconium oxide, cerium oxide, and a mixture thereof

Further, in order to improve transparency of an inorganic UV absorbent-containing agent, those having an average basic particle diameter between 5 nm and 500 nm in average particle diameter are preferable, and those having an average basic particle diameter between 10 nm and 100 nm in average particle diameter are preferable, wherein they are metal oxide particles having a maximum particle diameter of 150 nm or less in a particle diameter distribution. This kind of coated or uncoated metal oxide pigment is further detailed in European Patent Publication Open to Public Inspection No. 0518773

Further, in the present invention, the inorganic UV absorbent is composed of surface-coated UV absorbent particles preferably having an average particle diameter of 10-100 nm in view of suppressing of degradation of an adjacent resin caused by oxidation via photocatalytic ability of inorganic oxide. In addition, the surface is preferably coated since coating of the surface produces the effect of improving dispersibility of inorganic UV absorbent particles. The inorganic UV absorbent subjected to coating the surface described therein is referred to as an inorganic UV absorbent subjected to a surface treatment via one chemical, electrotechnical, mechanochemical or mechanical step, or plural chemical, electrotechnical, mechanochemical or mechanical steps empolying an amino acid, beeswax, a fatty acid, fatty alcohol, an anionic surfactant; recithin, a fatty acid sodium salt, a potassium salt, a zinc salt, an iron salt or an aluminum salt, a metal alkoxide (titanium or aluminum alkoxide), polyethylene, silicone, protein such as collagen or elastin, alkanolamine, silicon oxide, metal oxide or a compound such as metal sodium hexametaphosphate.

The UV absorbent contains a compound having a function through which energy possessed by UV radiation in addition to the above-described is converted into oscillation energy in the molecule, and the oscillation energy is released as thermal energy or the like. Further, a light stabilizer or the like which acts like an optical energy conversion agent, called one producing an effect via use of an antioxidant, a colorant or the like in combination, or called quencher can be used in combination. However, in cases where the above-described UV absorbent is used, one in which a light absorption wavelength of a UV absorbent does not overlap an effective wavelength of a photopolymerization initiator should be chosen.

When a conventional UV absorbent is used, it is effective to use a photopolymerization initiator which generates radicals with visible light.

A consumption amount of the UV absorbent is 0.1- 20% by weight; preferably 1-15% by weight; and more preferably 3-10% by weight. When the consumption amount of the UV absorbent is more than 20% by weight, adhesion is degraded, and when the consumption amount of the UV absorbent is less than 0.1 % by weight, a weather resistance-improving effect is deteriorated.

### (Adhesion layer)

An adhesion layer used in the present invention is not specifically limited, as long as it exhibits function increasing adhesiveness between a silver alloy or a metal-laminate reflection layer and a resin substrate (resin film) or a resin layer, but it is preferably made of a resin. Accordingly, the adhesion layer should provide adhesion of the resin structure (resin film) to a metal reflection layer, heat resistance when forming the metal reflection layer via a vacuum evaporation method or the like, and smooth flatness to extract high reflection performance originally possessed by the metal reflection layer.

The resin used for the adhesion layer is not specifically limited as long as it satisfies the conditions of the above-described adhesion, heat resistance and smooth flatness. A polyester based resin, an acrylate based resin, a melamine based resin, an epoxy based resin, a polyamide resin, a vinyl chloride based resin, a vinyl chloride-vinyl acetate copolymer based resin can be used singly, or in mixture of these resins. A resin in which a polyester based resin and a melamine based resin are mixed is preferable in view of weather resistance. Further, it is more preferable to make it to be a thermosetting resin in which a hardener such as isocyanate or the like is mixed.

The adhesion layer preferably has a thickness of 0.01- 3 µm, and more preferably has a thickness of 0.1- 1 µm in view of adhesiveness, smooth flatness, reflectance of a reflective material and so forth.

As a method of forming an adhesion layer, usable is a conventionally known coating method such as a gravure coating method, a reverse coating method, a die coating method or the like.

### [Corrosion inhibiting layer (anticorrosion layer)]

As a constitution of a corrosion inhibiting layer in the present invention, a layer formed only of a corrosion inhibitor, or a layer made of a resin containing a corrosion inhibitor is provided, but it is preferable to be a resin layer containing a corrosion inhibitor. Further preferably, a resin layer containing a corrosion inhibitor having a content of 0.01 - 10% by weight may be used.

Further, a resin used for a corrosion inhibiting layer may be one serving as an adhesion agent layer, and it is not specifically limited as long as it exhibits a function in which adhesiveness between a silver alloy reflection layer or a metal laminate reflection layer and a resin substrate layer (resin film). Accordingly, the resin to be used for a corrosion inhibiting layer should have adhesion to closely attach a reflection layer and a resin substrate (resin film), heat resistance endurable to heat during formation of a reflection layer via a vacuum evaporation method or the like, and smooth flatness formed to extract reflection performance originally possessed by a reflection layer.

The resin used for a corrosion inhibiting layer relating to the present invention is not specifically limited as long as it satisfies the conditions of the above-described adhesion, heat resistance and smooth flatness. A polyester based resin, an acrylic resin, a melamine based resin, an epoxy based resin, a polyamide resin, a vinyl chloride based resin, a vinyl chloride-vinyl acetate copolymer based resin can be used singly, or in mixture of these resins. A resin in which a polyester based resin and a melamine based resin are mixed is preferable in view of weather resistance. Further, it is more preferable to make it to be a thermosetting resin in which a hardener such as isocyanate or the like is mixed.

The corrosion inhibiting layer in the present invention preferably has a thickness of 0.01 - 3 µm, and more preferably has a thickness of 0.1 - 1 µm in view of adhesiveness, smooth flatness, reflectance of a reflective material and so forth.

As a method of forming the corrosion inhibiting layer, usable is a conventionally known coating method such as a gravure coating method, a reverse coating method, a die coating method or the like.

### (Corrosion inhibitor)

As corrosion inhibitors each used for a corrosion inhibiting layer of the present invention aiming at anticorrosion of a silver reflection layer, preferably used are mainly an antioxidant, and a corrosion inhibitor possessing an adsorptive group with respect to silver.

Herein, "corrosion" means a phenomenon in which metal (silver) is chemically or electrochemically eroded by an environmental substrate enclosing the metal (silver), or is degraded in material quality (refer to JIS Z0103-2004).

In a film mirror for solar heat power generation of the present invention, an adhesion layer contains an antioxidant, and a corrosion inhibiting layer (anticorrosion layer) containing a corrosion inhibitor possessing an adsorptive group with respect to silver is preferably provided.

In addition, as to a content of the corrosion inhibitor, the optimum content is different, depending on a compound to be used, but a content of 0.1 - 1.0/m² is conventionally preferable.

### <Corrosion inhibitor possessing adsorptive group to silver>

The corrosion inhibitor possessing an adsorptive group to silver, which is applicable in the present invention, should be selected from the group consisting of, for example, amines and their derivatives, compounds each possessing a pyrrole ring, compounds each possessing a triazole ring, compounds each possessing a pirazole ring, compounds each possessing a thiazole ring, compounds each possessing an imidazole ring, copper chelate compounds, thioureas, compounds each possessing a mercapto group, and at least one of naphthalane-based kinds or a mixture thereof.

Examples of amines and their derivatives include ethyl amine, lauryl amine, tri-n-butyl amine, o-toluidine, diphenyl amine, ethylene diamine, diethylene triamine, triethylene tetramine, tetraethylene pentamine, monoethanol amine, diethanol amine, triethanol amine, 2N-dimethylethanol amine, 2-amino-2-methyl-1, 3-propane diol, acetoamide, acrylamide, benzamide, p-ethoxychrysoidine, dicyclohexyl ammonium nitrite, dicyclohexyl ammonium salicylate, monoethanol amine benzoate, dicyclohexyl ammonium benzoate, diisopropyl ammonium benzoate, diisopropyl ammonium nitrite, cyclohexyl amine carbamate, nitronaphthalene ammonium nitrite, cyclohexyl amine benzoate, dicyclohexyl ammonium cyclohexane carboxylate; cyclohexyl amine cyclohexane carboxylate, dicyclohexyl ammonium acrylate, cyclohexyl amine acrylate and so forth, or mixtures thereof

Examples of compounds each possessing a pyrrole ring include N-butyl-2, 5-dimethyl pyrrole, N-phenyl-2, 5-dimethyl pirrole, N-phenyl-3-formyl-2, 5-dimethyl pirrole, N-phenyl-3, 4-diformyl-2, 5-dimethyl pirrole and so forth, or mixtures thereof

Examples of compounds each possessing a triazole ring include 1,2,3-triazole; 1,2,4-triazole; 3-mercapto-1, 2,4-triazole; 3-hydroxy-1, 2,4-triazole; 3-methyl-1, 2,4-triazole; 1-methyl-1, 2, 4-triazole; 1-methyl-3-mercapto-1,2, 4-triazole; 4-methyl-1,2, 3-triazole; benzotriazole; tlyltriazole; 1-hydroxy benzotriazole; 4, 5, 6, 7-tetrahydrotriazole; 3-amino-1, 2,4-triazole; 3-amino-5-methyl-1, 2, 4-triazole; carboxybenzotriazole; 2-(2'-hydroxy-5'-methylphenyl) benzotriazole; 2-(2'-hydroxy-5'-tert-butylphenyl) benzotriazole, 2-(2'-hydroxy-3', 5'-di-tert-butylphenyl) benzotriazole; 2-(2'-hydroxy-4-octoxyphenyl) benzotriazole and so forth; or mixtures thereof.

Examples of compounds each possessing a pirazole ring include pirazole, pyrazoline, pyrazolone, pyrazolidine, pyrazolidone, 3, 5-dimethyl pyrazole, 3-methyl-5-hydroxy pyrazole, 4-amino pyrazole and so forth, or mixtures thereof.

Examples of compounds each possessing a thiazole ring include thiazole, thiazoline, thiazolone, thiazolidine, thiazolidone, isothiazole, benzothiazole, 2-N, N-diethylthiobenzothiazole, P-dimethylaminobenzal rhodanine, 2-mercaptobenzothiazole and so forth, or mixtures thereof.

Examples of compounds each possessing an imidazole ring include imidazole, histidine, 2-heptadecyl imidazole, 2-methyl imidazole, 2-ethyl-4-methyl imidazole, 2-phenyl imidazole, 2-undecyl imidazole, 1-benzyl-2-methyl imidazole, 2-phenyl-4-methyl imidazole, 1-cyanoethyl-2-methyl imidazole, 1-cyanoethyl-2-phenyl imidazole, 1-cyanoethyl-2-ethyl-4-methyl imidazole, 1-cyanoethyl-2-undecyl imidazole, 2-phenyl-4-methyl-5-hydromethyl imidazole, 2-phenyl-4, 5-dihydroxymethy imidazole, 4-formyl imidazole, 2-methyl-4-formyl imidazole, 2-phenyl-4-formyl imidazole, 4-methyl-5-formyl imidazole, 2-ethyl-4-methyl-5-formyl imidazole, 2-phenyl-4-methyl-4-formyl imidazole, 2-mercaptobenzimidazole and so forth, or mixtures thereof

Examples of compounds each possessing an indazole ring include 4-chloroindazole, 4-nitroindazole, 5-nitroindazole, 4-chloro-5-nitroindazole and so forth, or mixtures thereof.

Examples of copper chelate compounds include acetylacetone copper, ethylene diamine copper, copper phthalocyanine, ethylene diamine tetraacetate copper, copper hydroxyquinoline and so forth, or mixtures thereof.

Examples of thioureas include thiourea, guanylthiourea and so forth, or mixtures thereof.

Examples of compounds each possessing a mercapto group in addition to materials having been already described above include a mercaptoacetic acid, thiophenol, 1, 2-ethane diol, 3-mercapto-1, 2, 4-thiazole, 1-methyl-3-mercapto-1, 2, 4-triazole, 2-mercaptobenzothiazole, 2-2-mercaptobenzimidazole, glycol dimercaptoacetate, 3-mercaptopropyltrimethoxy silane and so forth, or mixtures thereof

Examples of the naphthalane-based include thionalide and so forth.

### [Reflection layer]

### [Preparation of silver alloy reflection layer]

A dry process method is preferably applicable as a method of forming a metal reflection layer of the present invention.

The dry process method is collectively designated as a vacuum deposition method, and examples of specific methods to be exemplified include a resistance heating system vacuum evaporation method, an electron beam heating system vacuum evaporation method, an ion plating method, an ion beam assisted vacuum evaporation method, a sputtering method and so forth. In order to laminate a silver alloy reflection layer by the foregoing evaporation method, lamination can be made by conducting co-evaporation of silver and metal to form an alloy with silver, or evaporating a silver alloy prepared in advance. Further, in order to laminate a silver alloy reflection layer by sputtering, lamination can be made by co-sputtering silver and metal to form a silver alloy as sputtering targets, or sputtering a silver alloy prepared in advance as a sputtering target. Specifically, a co-evaporation method by which film formation is possible to be continuously conducted via a roll-to-roll system is preferably used in the present invention. Further, in the present invention, a method of evaporating a silver alloy prepared in advance is preferably used in view of composition evenness of the silver alloy.

A sputtering target and an evaporation source in the present invention can be formed of thin film preparation raw material. A component composition of this raw material may be identical to the component composition of a silver alloy thin film to be formed. A silver alloy for thin film preparation of the present invention can be prepared under the appropriate plastic forming condition, heating condition and so forth by a commonly known alloy preparation method such as a powder metallurgy method, a melt-casting method or the like.

The silver alloy reflection layer of the present invention preferably has a thickness of 10-200 nm, and more preferably has a thickness of 30 -150 nm in view of reflectance and so forth.

### [Preparation of silver, and main group metal or transition metal reflection layer]

A dry process method is preferably applicable as a method of forming a metal laminate reflection layer of the present invention.

The dry process method is collectively designated as a vacuum deposition method, and examples of specific methods to be exemplified include a resistance heating system vacuum evaporation method, an electron beam heating system vacuum evaporation method, an ion plating method, an ion beam assisted vacuum evaporation method, a sputtering method and so forth. In order to laminate a metal laminate reflection layer by the foregoing evaporation method, after forming a silver layer, main group metal or transition metal to be laminated on the silver layer is evaporated to obtain a metal laminate reflection layer.

In the present invention, the silver layer preferably has a thickness of 10-200 nm, and more preferably has a thickness of 30-150 nm in view of reflectance and so forth. Further, a main group metal layer or a transition metal layer laminated on a silver layer has a thickness of 5 nm or more in view of reflectance, and has a thickness of 50 µm or less as an upper limit of the thickness in view of roll winding.

### (Silver, and metal to form alloy reflection layer or metal to form reflection layer via lamination with silver layer)

In the present invention, as metal with silver to form an alloy reflection layer, and metal with silver to form a reflection layer via lamination, a main group metal element or a transition metal element having a reflectance of 39% or more at a wavelength of 320 nm is suitable. Herein, examples of the main group metal include Be (beryllium), Mg (magnesium), Al (aluminum), Ca (calcium), Sr (strontium), In (indium) or Ba (barium), Sn (tin), Sb (antimony), and Bi (bismuth).

Further, examples of the transition metal include Ti (titanium), V (vanadium), Cr (chromium), Mn (manganese), Fe (iron), Co (cobalt), Ni (nickel), Cu (copper), Zn (zinc), Y (yttrium), Zr (zirconium), Nb (niobium), Mo (molybdenum), Ru (ruthenium), Rh (rhodium), Pd (palladium), Hf (hafnium), Ta (tantalum), W (tungsten), Re (rhenium), Ir (iridium), Pt (platinum), Au (gold), La (lanthanum), Ce (cerium), Pr (praseodymium), Nd (neodymium), Pm (promethium), Sm (samarium), Eu (europium), Gd (gadolinium), Dy (dysprosium), Ho (holmium), Er (erbium), Tm (thulium), Yb (ytterbium) or Lu (lutetium).

Not only a silver alloy reflection layer containing 0.1 % or more by weight of the foregoing main group metal element or transition metal element having a reflectance of 39% or more at a wavelength of 320 nm, but also a metal reflection layer made of a main group metal element or a transition metal element having a reflectance of 39% or more at a wavelength of 320 nm reflects UV radiation at wavelength of 290 - 330 nm; inhibits degradation of a low molecular weight component of a sticky adhesive resin, a residual polymerization initiator and a residual monomer; and suppresses a decline of reflectance. Further, in cases where a silver alloy layer is formed of a metal element exhibiting higher ionization tendency than that of silver, a sacrificial corrosion protection effect is generated, whereby a decline of reflectance caused by corrosion of silver is suppressed Herein, a main group metal element or a transition metal element having a reflectance of 39% or more at a wavelength of 320 nm is referred to as metal having a reflectance of 39% or more at wavelength of 320 nm, wherein the metal constitutes a film made singly of the main group metal or transition metal, as previously described.

### [Resin support (layer)]

As a substrate used as a resin support (layer) relating to the present invention, usable are conventionally known various resin films. Examples thereof include cellulose ester based films, polyester based films, polycarbonate based films, polyarylate based films, polysulfon (including polyethersulfon) based films, polyester films such as a polyethylene terephthalate film, a polyethylene naphthalate film and so forth, a polyethylene film, a polypropylene film, cellophane, a cellulose diacetate film, a cellulose triacetate film, a cellulose acetate propionate film, a cellulose acetate butyrate film, polyvinylidene chloride, a polyvinyl alcohol film, an ethylene vinyl alcohol film, syndiotactic polystyrene based films, a polycarbonate film, norbornene based films, a polymethyl pentene film, a polyether ketone film, a polyether ketone imide film, a polyamide film, a fluorine resin film, a nylon film, a polymethyl methacrylate film an acrylic film, and so forth.

Of these, polycarbonate based films polyester based films, norbornene based films, and cellulose ester based films are preferable. Specifically, polyester based films and cellulose ester based films are preferably used, and may be films prepared via melt-cast film formation, or may be films prepared via solution-cast film formation.

The resin support preferably has an appropriate thickness, depending on kinds of the resin, the purpose and so forth.

For example, the resin support generally has a thickness of 10-300 µm; preferably has a thickness of 20 - 200 µm; and more preferably has a thickness of 30-100 µm.

### [Sticky adhesive layer]

The configuration of the sticky adhesive layer in the present invention is not specifically limited, and for example, any of a dry laminate agent, a wet laminate agent, an adhesion agent, a heat sealing agent, a hot melt agent and so forth is usable.

For example, polyester based resins, urethane based resins, polyvinyl acetate based resins, acrylic resins, nitrile rubber and so forth are employed.

The laminating method is not specifically limited, and it is preferable to continuously conduct, for example, with a roll system in view of economy and productivity.

It is preferable that the sticky adhesion layer conventionally has a thickness of roughly 1-50 µm in view of a sticky adhesive effect, a drying speed and so forth.

Another substrate onto which a film mirror for solar heat power generation in the present invention is attached may be one capable of providing protection for a silver reflection layer, and usable examples thereof include an acrylic film or sheet, a polycarbonate film or sheet, a polyacrylate film or sheet, a polyethylene naphthalate film or sheet, a polyethylene terephthalate film or sheet, a plastic film or sheet such as a fluorine film, a resin film or sheet in which titanium oxide, silica, aluminum powder, copper powder or the like is kneaded, and a resin film or sheet on which this kneaded resin is coated or which is subjected to a surface treatment via metal evaporation or the like.

Thickness of the film or sheet to be attached onto is not specifically limited, but it is preferable that the thickness is conventionally 12-250 µm.

Further, before other substrates each on which a film mirror for solar heat power generation is attached, the film mirror may be attached on the substrate after forming concave and convex portions on the substrate; the concave and convex portions maybe formed on the substrate after attaching the film mirror on the substrate; and the concave and convex portions may be formed on the substrate while attaching the film mirror on the substrate at the same time.

### [Thickness of film mirror for solar heat power generation]

A film mirror for solar heat power generation in the present invention preferably has a total thickness of 75-250 µm; more preferably has a total thickness of 90-230 µm; and still more preferably has a total thickness of 100-220 µm in view of prevention of deflection, regular reflectance, handling and so forth.

### [Reflection device for solar heat power generation]

A film mirror for solar heat power generation of the present invention is preferably usable in order to collect sunlight. The film mirror for solar power heat generation can be used singly as a solar heat collecting mirror, but more preferably, a film mirror for solar heat power generation of the present invention is attached specifically onto a metal support as another substrate to use it as a reflection device for solar heat power generation of the present invention via a sticky adhesive layer coated on the surface of a resin substrate on the side opposite to the side where a silver reflection layer is present, wherein the sticky adhesive layer is sandwiched by the silver reflection layer and the sticky adhesive layer.

It is an embodiment that when using it as a reflection device for solar heat power generation, the reflection device is arranged to be gutter-shaped (half-cylindrical); a cylindrical member having fluid in the inside at the center of the semicircle is provided; the fluid in the inside is heated by collecting solar heat into the cylindrical member; and the thermal energy is converted to generate electric power. It is also another embodiment that plate-shaped reflection devices are placed at plural locations; sunlight reflected by each of the reflection devices is collected at a reflection mirror (central reflection mirror); and thermal energy obtained via reflection at the reflection mirror is converted at a power generation section to generate electric power. Specifically in the latter embodiment, a film mirror of the present invention is suitably utilized since high regular reflectance is desired for a reflection device to be used.

### <Metal support>

Usable examples of metal supports used in the reflection device for solar heat power generation of the present invention include a steel plate, a copper plate, an aluminum plate, an aluminum plated steel plate, an aluminum system alloy plated steel plate, a copper plated steel plate, a tin plated steel plate, a chromium plated steel plate, and a metallic material exhibiting high thermal conductivity such as a stainless steel plate or the like.

In the present invention, a plated steel plate, a stainless steel plate, an aluminum plate and so forth are preferably used.

### EXAMPLE

Next, the present invention will be specifically described referring to Examples, but the present invention is not limited thereto. Incidentally, "parts" and "%" are indicated in Examples, but they represent "parts by weight" and "% by weight", respectively unless otherwise specifically mentioned.

### « Preparation of reflection device for solar heat power generation>>

### [Preparation of sample 1; Example 1]

Block-like Ag (silver) having a purity at 99.99 at% and block-like Al (aluminum) having a purity of 99.99 at% were blended at a weight ratio of 99.9 : 0.1 to melt an ingot in a vacuum melting furnace. This ingot was to hot-rolling, and subsequently was subjected to repeatedly cold-rolling and annealing to obtain an evaporation source made of a silver - aluminum alloy containing aluminum having a content of 0.1 % by weight

As a resin substrate, used was a biaxially-stretched polyester film (a polyethylene terephthalate film having a thickness of 100 µm). A 80 nm thick silver - aluminum alloy reflection layer was formed on one surface of the above-described polyethylene terephthalate film by a vacuum evaporation method employing the foregoing silver aluminum alloy evaporation source, and a 0.1 µm thick anticorrosion layer was coated and formed on this reflection layer by a gravure coating method so as to make a coating amount to be 0.3 g/m² by adding glycol dimercaptoacetate as a corrosion inhibitor into a resin in which a polyester based resin and a toluene diisocyanate based resin were mixed at a solid content ratio (weight ratio) of 10:2.

Subsequently, a 10 µm thick acrylic resin adhesive (produced by SHOWA HIGH POLYMER CO. LTD.) was coated as an adhesive layer, and a 50 µm thick acrylic resin film (produced by POLYMER · EXCLUDED PRODUCT) was laminated on the adhesion layer as a UV absorption layer. Then, OPSTER Z7530 (produced by JSR Corporation) was coated on the UV absorption layer as a hard coat layer via gravure coating so as to give a wet film thickness of 50 µm, and the resulting was exposed to UV radiation employing a UV conveyor (light source: high pressure mercury lamp, and Illuminance: 100 mW/cm²) to prepare a film, mirror for solar heat power generation.

Further, a 10 µm thick acrylic resin adhesive (produced by SHOWA HIGH POLYMER CO. LTD.) was coated on a substrate made of a resin as a sticky adhesive layer, and the above-described sample was attached onto an aluminum plate (produced by SUMITOMO LIGHT METAL INDUSTRIES. LTD.) which is 4 cm long, 5 cm wide, and 0.1 mm thick, via the sticky adhesive layer to prepare sample I as a reflection device for solar heat power generation.

In addition, as to metal to be added, a 100 nm thick vacuum evaporation film made of each metal was separately prepared on a glass substrate (BK7) by a vacuum evaporation method, and was cut to a square, 2.5 cm on a side. Reflectance of the resulting sample at a wavelength of 320 nm was measured employing a spectrophotometer UV 265 (manufactured by Shimadzu Corporation) equipped with an integrating sphere reflection accessory device. An incident angle of incident light is designed to be 5° with respect to a normal line to the reflecting plane to measure regular reflectance at a reflecting angle of 5° by introducing reflected light of incident light into an integrating sphere. Thus, it was designated as reflectance of metal at a wavelength of 320 nm (shown in Tables 1 and 2).

### [Preparation of sample 2; Example 2]

Sample 2 as a reflection device for solar heat power generation was prepared similarly to preparation of sample 1 described above, except that an Al (aluminum) block was replaced by an Rh (rhodium) block during preparation of an evaporation source.

### [Preparation of sample 3; Example 3]

Sample 3 as a reflection device for solar heat power generation was prepared similarly to preparation of sample 1 described above, except that an Al (aluminum) block was replaced by a Pt (platinum) block during preparation of an evaporation source.

### [Preparation of sample 4; Example 4]

Sample 4 as a reflection device for solar heat power generation was prepared similarly to preparation of sample 1 described above, except that an Al (aluminum) block was replaced by a Cr (chromium) block during preparation of an evaporation source.

### [Preparation of sample 5; Example 5]

Sample 5 as a reflection device for solar heat power generation was prepared similarly to preparation of sample 1 described above, except that an Al (aluminum) block was replaced by an Ni (nickel) block during preparation of an evaporation source.

### [Preparation of sample 6; Example 6]

Sample 6 as a reflection device for solar heat power generation was prepared similarly to preparation of sample 1 described above, except that an Al (aluminum) block was replaced by a Zn (zinc) block during preparation of an evaporation source.

### [Preparation of sample 7; Example 7]

Sample 7 as a reflection device for solar heat power generation was prepared similarly to preparation of sample 1 described above, except that an Ag (silver) block and an Al (aluminum) block were blended at a weight ratio of 98:2 during preparation of an evaporation source.

### [preparation of sample 8; Example 8]

Sample 8 as a reflection device for solar heat power generation was prepared similarly to preparation of sample 2 described above, except that an Ag (silver) block and an Rh (rhodium) block were blended at a weight ratio of 98 : 2 during preparation of an evaporation source.

### [Preparation of sample 9; Example 9]

Sample 9 as a reflection device for solar heat power generation was prepared similarly to preparation of sample 3 described above, except that an Ag (silver) block and a Pt (platinum) block were blended at a weight ratio of 98 : 2 during preparation of an evaporation source.

### [Preparation of sample 10; Example 10]

Sample 10 as a reflection device for solar heat power generation was prepared similarly to preparation of sample 4 described above, except that an Ag (silver) block and a Cr (chromium) block were blended at a weight ratio of 98 : 2 during preparation of an evaporation source.

### [Preparation of sample 11; Example 11]

Sample 11 as a reflection device for solar heat power generation was prepared similarly to preparation of sample 5 described above, except that an Ag (silver) block and an Ni (nickel) block were blended at a weight ratio of 98 : 2 during preparation of an evaporation source.

### [preparation of sample 12; Example 12]

Sample 12 as a reflection device for solar heat power generation was prepared similarly to preparation of sample 6 described above, except that an Ag (silver) block and a Zn (zinc) block were blended at a weight ratio of 98 : 2 during preparation of an evaporation source.

### [Preparation of sample 13; Example 13]

Sample 13 as a reflection device for solar heat power generation was prepared similarly to preparation of sample 1 described above, except that an Ag (silver) block and a Zn (zinc) block were blended at a weight ratio of 90 : 10 during preparation of an evaporation source.

### [Preparation of sample 14; Example 14]

Sample 14 as a reflection device for solar heat power generation was prepared similarly to preparation of sample 2 described above, except that an Ag (silver) block and an Rh (rhodium) block were blended at a weight ratio of 90 : 10 during preparation of an evaporation source.

### [Preparation of sample 15; Example 15]

Sample 15 as a reflection device for solar heat power generation was prepared similarly to preparation of sample 3 described above, except that an Ag (silver) block and a Pt (platinum) block were blended at a weight ratio of 90 : 10 during preparation of an evaporation source.

### [Preparation of sample 16; Example 16]

Sample 16 as a reflection device for solar heat power generation was prepared similarly to preparation of sample 4 described above, except that an Ag (silver) block and a Cr (chromium) block were blended at a weight ratio of 90 : 10 during preparation of an evaporation source.

### [preparation of sample 17; Example 17]

Sample 17 as a reflection device for solar heat power generation was prepared similarly to preparation of sample 5 described above, except that an Ag (silver) block and an Ni (nickel) block were blended at a weight ratio of 90 : 10 during preparation of an evaporation source.

### [Preparation of sample 18; Examples 18]

Sample 18 as a reflection device for solar heat power generation was prepared similarly to preparation of sample 6 described above, except that an Ag (silver) block and a Zn (zinc) block were blended at a weight ratio of 90 : 10 during preparation of an evaporation source.

### [Preparation of sample 29; Example 19]

As a resin substrate, used was a biaxially-stretched polyester film (a polyethylene terephthalate film having a thickness of 100 µm). A 50 nm thick Al (aluminum) layer was formed on one surface of the above-described polyethylene terephthalate film by a vacuum evaporation method employing Al (aluminum) as an evaporation source, followed by forming a 80 nm thick Ag (silver) layer by a vacuum evaporation method employing Ag (silver) as an evaporation source.

A 0.1 µm thick anticorrosion layer was coated and formed on this reflection layer by a gravure coating method so as to make a coating amount to be 0.3 g/m² by adding glycol dimercaptoacetate as a corrosion inhibitor into a resin in which a polyester based resin and a toluene diisocyanate based resin were mixed at a solid content ratio (weight ratio) of 10 : 2. Subsequently, a 10 µm thick acrylic resin adhesive (produced by SHOWA HIGH POLYMER CO. LTD.) was coated as an adhesive layer, and a 50 µm thick acrylic resin film (produced by POLYMER · EXCLUDED PRODUCT) was laminated on the adhesion layer as a UV absorption layer.

Then, OPSTER Z7530 (produced by JSR Corporation) was coated on the UV absorption layer as a hard coat layer via gravure coating so as to give a wet film thickness of 50 µm, and the resulting was exposed to UV radiation employing a UV conveyor (light source: high pressure mercury lamp, and Illuminance: 100 mW/cm²) to prepare a film mirror for solar heat power generation. Further, a 10 µm thick acrylic resin adhesive (produced by SHOWA HIGH POLYMER CO. LTD.) was coated on a substrate made of a resin as a sticky adhesive layer, and the above-described sample was attached onto an aluminum plate (produced by SUMITOMO LIGHT METAL INDUSTRIES. LTD.) which is 4 cm long, 5 cm wide, and 0.1 mm thick, via the sticky adhesive layer to prepare sample 29 as a reflection device for solar heat power generation.

### [Preparation of sample 30; Example 20]

Sample 30 as a reflection device for solar heat power generation was prepared similarly to preparation of sample 29 described above, except that Al (aluminum) as an evaporation source was replaced by Rh (rhodium), and a 50 µm thick Rh (rhodium) layer was laminated.

### [Preparation of sample 31; Example 21]

Sample 31 as a reflection device for solar heat power generation was prepared similarly to preparation ofsample 29 described above, except that Al (aluminum) as an evaporation source was replaced by Pt (platinum), and a 50 µm thick Pt (platinum) layer was laminated.

### [Preparation of sample 32; Example 22]

Sample 32 as a reflection device for solar heat power generation was prepared similarly to preparation of sample 29 described above, except that Al (aluminum) as an evaporation source was replaced by Cr (chromium), and a 50 µm thick Cr (chromium) layer was laminated.

### [Preparation of sample 33; Example 23]

Sample 33 as a reflection device for solar heat power generation was prepared similarly to preparation of sample 29 described above, except that Al (aluminum) as an evaporation source was replaced by Ni (nickel), and a 50 µm thick Cr Ni (nickel) layer was laminated.

### [Preparation of sample 34; Example 24]

Sample 34 as a reflection device for solar heat power generation was prepared similarly to preparation of sample 29 described above, except that Al (aluminum) as an evaporation source was replaced by Zn (zinc), and a 50 µm thick Zn (zinc) layer was laminated.

### [Preparation of sample 35; Example 25]

Sample 35 as a reflection device for solar heat power generation was prepared similarly to preparation of sample 29 described above, except that a 50 µm thick Al (aluminum) layer was laminated.

### [Preparation of sample 36; Example 26]

Sample 36 as a reflection device for solar heat power generation was prepared similarly to preparation of sample 29 described above, except that Al (aluminum) as an evaporation source was replaced by Rh (rhodium), and a 5 nm thick Rh (rhodium) layer was laminated.

### [Preparation of sample 37; Example 27]

Sample 37 as a reflection device for solar heat power generation was prepared similarly to preparation of sample 29 described above, except that Al (aluminum) as an evaporation source was replaced by Pt (platinum), and a 5 nm thick Pt (platinum) layer was laminated.

### [Preparation of sample 38; Example 28]

Sample 38 as a reflection device for solar heat power generation was prepared similarly to preparation of sample 29 described above, except that Al (aluminum) as an evaporation source was replaced by Cr (chromium), and a 5 nm thick Cr (chromium) layer was laminated.

### [Preparation of sample 39; Example 29]

Sample 39 as a reflection device for solar heat power generation was prepared similarly to preparation of sample 29 described above, except that Al (aluminum) as an evaporation source was replaced by Ni (nickel), and a 5 nm thick Ni (nickel) layer was laminated.

### [Preparation of sample 40; Example 30]

Sample 40 as a reflection device for solar heat power generation was prepared similarly to preparation of sample 29 described above, except that Al (aluminum) as an evaporation source was replaced by Zn (zinc), and a 5 nm thick Zn (zinc) layer was laminated.

### [Preparation of sample 19; Comparative example 1]

Sample 19 as a reflection device for solar heat power generation was prepared similarly to preparation of sample 1 described above, except that an Ag (silver) block and an Al (aluminum) block were blended at a weight ratio of 88 : 12 during preparation of an evaporation source.

### [Preparation of sample 20; Comparative example 2]

Sample 20 as a reflection device for solar heat power generation was prepared similarly to preparation of sample 2 described above, except that an Ag (silver) block and an Rh (rhodium) block were blended at a weight ratio of 88 : 12 during preparation of an evaporation source.

### [Preparation of sample 21; Comparative example 3]

Sample 21 as a reflection device for solar heat power generation was prepared similarly to preparation of sample 3 described above, except that an Ag (silver) block and a Pt (platinum) block were blended at a weight ratio of 88 : 12 during preparation of an evaporation source.

### [Preparation of sample 22; Comparative example 4]

Sample 22 as a reflection device for solar heat power generation was prepared similarly to preparation of sample 4 described above, except that an Ag (silver) block and a Cr (chromium) block were blended at a weight ratio of 88 : 12 during preparation of an evaporation source.

### [Preparation of sample 23; Comparative example 5]

Sample 23 as a reflection device for solar heat power generation was prepared similarly to preparation of sample 5 described above, except that an Ag (silver) block and a Ni (nickel) block were blended at a weight ratio of 88 : 12 during preparation of an evaporation source.

### [Preparation of sample 24; Comparative example 6]

Sample 24 as a reflection device for solar heat power generation was prepared similarly to preparation of sample 6 described above, except that an Ag (silver) block and a Zn (zinc) block were blended at a weight ratio of 88 : 12 during preparation of an evaporation source.

### [Preparation of sample 25; Comparative example 7]

Sample 25 as a reflection device for solar heat power generation was prepared similarly to preparation of sample 1 described above, except that an Al (aluminum) block was replaced by Cu (copper) block during preparation of an evaporation source.

### [preparation of sample 26; Comparative example 8]

Sample 26 as a reflection device for solar heat power generation was prepared similarly to preparation of sample 25 described above, except that an Ag (silver) block and a Cu (copper) block were blended at a weight ratio of 88 : 12 during preparation of an evaporation source.

### [Preparation of sample 27; Comparative example 9]

Sample 27 as a reflection device for solar heat power generation was prepared similarly to preparation of sample 25 described above, except that an Ag (silver) block and a Cu (copper) block were blended at a weight ratio of 90 : 10 during preparation of an evaporation source.

### [Preparation of sample 28; Comparative example 10]

Sample 28 as a reflection device for solar heat power generation was prepared similarly to preparation of sample 29 described above, except that a lamination process of the Al (aluminum) layer was removed therefromm..

### [Preparation of sample 41; Comparative example 11]

Sample 41 as a reflection device for solar heat power generation was prepared similarly to preparation of sample 29 described above, except that a 1 nm thick Al (aluminum) layer was laminated.

### [Preparation of sample 42; Comparative example 12]

Sample 42 as a reflection device for solar heat power generation was prepared similarly to preparation of sample 29 described above, except that Al (aluminum) as an evaporation source was replaced by Rh (rhodium), and a 1 nm thick Rh (rhodium) layer was laminated.

### [Preparation of sample 43; Comparative example 13]

Sample 43 as a reflection device for solar heat power generation was prepared similarly to preparation of sample 29 described above, except that Al (aluminum) as an evaporation source was replaced by Pt (platinum), and a 1 nm thick Pt (platinum) layer was laminated.

### [Preparation of sample 44; Comparative example 14]

Sample 44 as a reflection device for solar heat power generation was prepared similarly to preparation of sample 29 described above, except that Al (aluminum) as an evaporation source was replaced by Cr (chromium), and a 1 nm thick Cr (chromium) layer was laminated.

### [Preparation of sample 45; Comparative example 15]

Sample 45 as a reflection device for solar heat power generation was prepared similarly to preparation of sample 29 described above, except that Al (aluminum) as an evaporation source was replaced by Ni (nickel), and a 1 nm thick Ni (nickel) layer was laminated.

### [Preparation of sample 46; Comparative example 16]

Sample 46 as a reflection device for solar heat power generation was prepared similarly to preparation of sample 29 described above, except that Al (aluminum) as an evaporation source was replaced by Zn (zinc), and a 1 nm thick Zn (zinc) layer was laminated.

### [Preparation of sample 47; Comparative example 17]

Sample 47 as a reflection device for solar heat power generation was prepared similarly to preparation of sample 29 described above, except that a 55 µm thick Al (aluminum) layer was laminated.

### [Preparation of sample 48; Comparative example 18]

Sample 48 as a reflection device for solar heat power generation was prepared similarly to preparation of sample 29 described above, except that Al (aluminum) as an evaporation source was replaced by Rh (rhodium), and a 55 µm thick Rh (rhodium) layer was laminated.

### [preparation of sample 49; Comparative example 19]

Sample 49 as a reflection device for solar heat power generation was prepared similarly to preparation of sample 29 described above, except that Al (aluminum) as an evaporation source was replaced by Pt (platinum), and a 55 µm thick Pt (platinum) layer was laminated.

### [Preparation of sample 50; Comparative example 20]

Sample 50 as a reflection device for solar heat power generation was prepared similarly to preparation of sample 29 described above, except that A] (aluminum) as an evaporation source was replaced by Cr (chromium), and a 55 µm thick Cr (chromium) layer was laminated.

### [Preparation of sample 51; Comparative example 21]

Sample 51 as a reflection device for solar heat power generation was prepared similarly to preparation of sample 29 described above, except that Al (aluminum) as an evaporation source was replaced by Ni (nickel), and a 55 µm thick Ni (nickel) layer was laminated.

### [Preparation of sample 52; Comparative example 22]

Sample 52 as a reflection device for solar heat power generation was prepared similarly to preparation of sample 29 described above, except that Al (aluminum) as an evaporation source was replaced by Zn (zinc), and a 55 µm thick Zn (zinc) layer was laminated.

### [Preparation of sample 53; Comparative example 23]

Sample 53 as a reflection device for solar heat power generation was prepared similarly to preparation of sample 29 described above, except that Al (aluminum) as an evaporation source was replaced by Cu (copper), and a 50 µm thick Cu (copper) layer was laminated.

### [Preparation of sample 54; Comparative example 24]

Sample 54 as a reflection device for solar heat power generation was prepared similarly to preparation of sample 29 described above, except that Al (aluminum) as an evaporation source was replaced by Cu (copper), and a 5 nm thick Cu (copper) layer was laminated.

### [Preparation of sample 55; Comparative example 25]

Sample 55 as a reflection device for solar heat power generation was prepared similarly to preparation of sample 29 described above, except that film thickness of the Cu (copper) layer was set to 1 nm.

### <<Evaluation of each sample>>

As to each of the resulting reflection device for solar heat power generation described above, light resistance (regular reflectance stability) and weather resistance of a sticky adhesive layer (peeling of film) were evaluated in accordance with the following method.

### [Evaluation of light resistance: Regular reflectance stability]

After each of samples was exposed to UV radiation at 65°C for 7 days employing EYE Super UV Tester manufactured by IWASAKI Electric Co., Ltd., regular reflectance was measured to calculate a mean value of regular reflectance after exposure thereof to UV radiation. Thus, light resistance was evaluated in accordance with the following criteria.

In order to measure regular reflectance, a spectrophotometer "UV 265" manufactured by Shimadzu Corporation equipped with an integrating sphere reflection accessory device was remodeled, and adjusted so as to make an incident angle of incident light to be 5° with respect to a normal line to the reflecting plane to measure regular reflectance at a reflecting angle of 5° after each sample was subjected to a degradation treatment. As to evaluations, it was measured as mean reflectance at a wavelength of 350-700 nm.
A: The mean value of regular reflectance is not less than 85%.
B: The mean value of regular reflectance is not less than 80% and less than 85%.
C: The mean value of regular reflectance is not less than 75% and less than 80%.
D: The mean value of regular reflectance is less than 75%.

### [Evaluation of sulfidation resistance: Regular reflectance stability]

After each sample was immersed in an aqueous 10% ammonium sulfide solution for 48 hour, regular reflectance was measured to evaluate a mean value of regular reflectance after conducting a sulfidation treatment. Thus, light resistance was evaluated in accordance with the following criteria.

In order to measure regular reflectance, a spectrophotometer "UV 265" manufactured by Shimadzu Corporation equipped with an integrating sphere reflection accessory device was remodeled, and adjusted so as to make an incident angle of incident light to be 5° with respect to a normal line to the reflecting plane to measure regular reflectance at a reflecting angle of 5° after each sample was subjected to a degradation treatment As to evaluations, it was measured as mean reflectance at a wavelength of 350-700 nm.
A: The mean value of regular reflectance is not less than 85%.
B: The mean value ofregular reflectance is not less than 80% and less than 85%.
C: The mean value of regular reflectance is not less than 75% and less than 80%.
D: The mean value of regular reflectance is less than 75%.

### [Evaluation of weather resistance of sticky adhesive layer (peeling of film)]

After the sticky adhesive layer was exposed to UV radiation at 65 °C for 7 days, employing EYE Super UV Tester manufactured by IWASAKI Electric Co., Ltd., adhesiveness of the sticky adhesive layer was evaluated in accordance with JIS K5400: grid cellophane tape peeling test That is, the sample surface after an enforced degradation test was cut in a 1 mm grid-like pattern with a cutter knife, and a cellophane tape (produced by NICHBAN Co., Ltd.) was attached thereon and subsequently peeled. Then, percentage ofpeeled portions was measured to evaluate weather resistance of the sticky adhesive layer in accordance with the following criteria.
A: percentage of film-peeled portions after a degradation test is less than 2.0%.
B: percentage of film-peeled portions after a degradation test is not less than 2.0% and less than 3.0%.
C: percentage of film-peeled portions after a degradation test is not less than 3.0%.

### [Evaluation of roll-winding property]

The roll-winding property was evaluated in a state of a film mirror for solar heat power generation before each sample was attached onto an aluminum substrate via the sticky adhesive layer. The film mirror for solar heat power generation having a length of 5 m was wound to an ABS resin core having a roll outer diameter of 150 mm and a width of 50 cm, and after it was left standing for one week, generation of cracks or flaws in a metal layer was visually evaluated.
Pass: No crack of flaw of a metal layer was observed.
Fail: Cracks or flaws of a metal layer were observed.

### [Actual result of technical feature]

Results obtained by evaluating each sample in accordance with the above-described method will be explained in sequence as described below by using combinations in which the effect of a constituting technique of each reflection device for solar heat power generation (film mirror for solar heat power generation).

As to actual results of the effect obtained by providing a silver alloy reflection layer containing silver as a main component, and 0.1 1% by weight or more of a main group metal element or a transition metal element exhibiting a reflectance of 39% or more at a wavelength of 320 nm, results obtained by evaluating weather resistance, employing a film mirror in which the silver alloy reflection layer is provided are shown in Fig. 1.

Results obtained by evaluating weather resistance with a film mirror fitted with a reflection layer in which a main group metal layer or a transition metal layer having a reflectance of 39% or more at a wavelength of 320 nm is laminated under a silver layer are shown in Fig. 2.

**Table 1**

| Sample No. | Alloy composition | Added metal | Reflectance of added metal at a wavelength of 320 nm (%) | Amount of added metal with respect to silver (%) | Property after light resistance test | | Property after sulfidation resistance test | Roll-winding property | Remarks |
|---|---|---|---|---|---|---|---|---|---|
| | | | | | Film-peeling | Reflectance | Reflectance | | |
| Sample 1 | Ag+Al | Al | 92.2 | 0.1 | A | B | A | Pass | Example 1 |
| Sample 2 | Ag+Rh | Rh | 75 | | A | B | B | Pass | Example 2 |
| Sample 3 | Ag+Pt | Pt | 48.5 | | A | B | B | Pass | Example 3 |
| Sample 4 | Ag+Cr | Cr | 65.9 | | A | B | B | Pass | Example 4 |
| Sample 5 | Ag+Ni | Ni | 39.3 | | A | B | B | Pass | Example 5 |
| Sample 6 | Ag+Zn | Zn | 60 | | A | B | A | Pass | Example 6 |
| Sample 7 | Ag+Al | Al | 92.2 | 2.0 | A | A | A | Pass | Example 7 |
| Sample 8 | Ag+Rh | Rh | 75 | | A | A | B | Pass | Example 8 |
| Sample 9 | Ag+Pt | Pt | 48.5 | | A | A | B | Pass | Example 9 |
| Sample 10 | Ag+Cr | Cr | 65.9 | | A | A | B | Pass | Example 10 |
| Sample 11 | Ag+Ni | Ni | 39.3 | | A | A | B | Pass | Example 11 |
| Sample 12 | Ag + Zn | Zn | 60 | | A | A | A | Pass | Example 12 |
| Sample 13 | Ag+Al | Al | 92.2 | 10.0 | A | B | B | Pass | Example 13 |
| Sample 14 | Ag+Rh | Rh | 75 | | A | B | B | Pass | Example 14 |
| Sample 15 | Ag+Pt | Pt | 48.5 | | A | B | B | Pass | Example 15 |
| Sample 16 | Ag+Cr | Cr | 65.9 | | A | B | B | Pass | Example 16 |
| Sample 17 | Ag+Ni | Ni | 39.3 | | A | B | B | Pass | Example 17 |
| Sample 18 | Ag+Zn | Zn | 60 | | A | B | B | Pass | Example 18 |
| Sample 19 | Ag+Al | Al | 92.2 | 12.0 | A | D | D | Pass | Comp.1 |
| Sample 20 | Ag + Rh | Rh | 75 | | A | D | D | Pass | Comp. 2 |
| Sample 21 | Ag+Pt | Pt | 48.5 | | A | D | D | Pass | Comp. 3 |
| Sample 22 | Ag+Cr | Cr | 65.9 | | A | D | D | Pass | Comp. 4 |
| Sample 23 | Ag+Ni | Ni | 39.3 | | A | D | D | Pass | Comp. 5 |
| Sample 24 | Ag+Zn | Zn | 60 | | A | D | D | Pass | - Comp. 6 |
| Sample 25 | Ag+Cu | Cu | 37.9 | 0.1 | C | D | C | Pass | Comp. 7 |
| Sample 26 | | | | 2.0 | B | D | C | Pass | Comp. 8 |
| Sample 27. | | | | 10.0 | B | D | C | Pass | Comp. 9 |
| Sample 28 | Ag | - | - | 0.0 | C | D | D | Pass | Comp. 10 |

| | | | | | | | | | |
|---|---|---|---|---|---|---|---|---|---|
| Comp.: Comparative example | | | | | | | | | |

As is clear from results described in Table 1, it is confirmed that samples 1-18 (Present invention: Examples 1-18) each having a silver alloy reflection layer therein containing 0.1 -10% by weight of a main group metal element or a transition metal element having a reflectance of 39% or more at a wavelength of 320 nm as specified in the present invention exhibit superior light resistance (regular reflectance stability) and superior weather resistance of the sticky adhesive layer (adhesiveness) to those of samples 19-28 as Comparative examples.

This is the result indicated by the fact that samples of the present invention each effectively reflect light having a wavelength of 290- 330 mn, which causes degradation of the sticky adhesive layer by using a silver alloy reflection layer containing 0.1-10% by weight of a main group metal element or a transition metal element having a reflectance of 39% or more at a wavelength of 320 nm to effectively suppress exposing the sticky adhesive layer to light in the same wavelength region as described above. In contrast, in the case of samples 19-20 each as a Comparative example, since reflectance of Cu (copper) at a wavelength of 320 nm is insufficient, it makes light having a wavelength of 290-330 nm which deteriorates the sticky adhesive layer to pass through, and as a result, it would appear that light resistance (regular reflectance stability) and weather resistance (adhesiveness) are degraded. Further, in the case of samples 19-24 each as a Comparative example, since the silver content in a silver alloy is insufficient, poor reflectance not only a the initial stage but also after conducting a degradation treatment has resulted. Further, it is to be understood that high sulfidation resistance has resulted when using an Ag (silver) / Zn (zinc) alloy for a reflection layer in the sulfidation resistance test.

**Table 2**

| Sample No. | Configuration of laminate reflection layer | Reflection layer metal | Reflectance of added metal at a wavelength of 320 nm(%) | Metal reflection layer thickness | Property after degradation test | | Property after sulfidation resistance test | Roll-winding property | Remarks |
|---|---|---|---|---|---|---|---|---|---|
| | | | | | Film-peeling | Reflectance | Reflectance | | |
| Sample 29 | Ag/Al | Al | 92.2 | 50 µm | A | B | B | Pass | Example 19 |
| Sample 30 | Ag/Rh | Rh | 75 | | A | B | B | Pass | Example 20 |
| Sample 31 | Ag/Pt | Pt | 48.5 | | A | B | B | Pass | Example 21 |
| Sample 32 | Ag/Cr | Cr | 65.9 | | A | B | B | Pass | 22 |
| Sample 33 | Ag/Ni | Ni | 39.3 | | A | B | B | Pass | Example 23 |
| Sample 34 | Ag/Zn | Zn | 60 | | A | B | B | Pass | Example 24 |
| Sample 35 | Ag/Al | Al | 92.2 | 5 nm | A | A | A | Pass | Example 25 |
| Sample 36 | Ag/Rh | Rh | 75 | | A | A | B | Pass | Example 26 |
| Sample 37 | Ag/Pt | Pt | 48.5 | | A | A | B | Pass | Example 27 |
| Sample 38 | Ag/Cr | Cr | 65.9 | | A | A | B | Pass | Example 28 |
| Sample 39 | Ag/Ni | Ni | 39.3 | | A | A | B | Pass | Example 29 |
| Sample 40 | Ag/Zn | Zn | 60 | | A | A | A | Pass | Example 30 |
| Sample 41 | Ag/Al | Al | 92.2 | 1 nm | B | C | C | Pass | Comp. 11 |
| Sample 42 | Ag/Rh | Rh | 75 | | B | C | C | Pass | Comp. 12 |
| Sample 43 | Ag/Pt | Pt | 48.5 | | B | C | C | Pass | Comp. 13 |
| Sample 44 | Ag/Cr | Cr | 65.9 | | B | C | C | Pass | Comp. 14 |
| Sample 45 | Ag/Ni | Ni | 39.3 | | B | C | C | Pass | Comp. 15 |
| Sample 46 | Ag/Zn | Zn | 60 | | B | C | C | Pass | Comp. 16 |
| Sample 47 | Ag/Al | Al | 92.2 | 55 µm | A | B | B | Fail | Comp. 17 |
| Sample 48 | Ag/Rh | Rh | 75 | | A | B | B | Fail | Comp. 18 |
| Sample 49 | Ag/Pt | Pt | 48.5 | | A | B | B | Fail | Comp. 19 |
| Sample 50 | Ag/Cr | Cr | 65.9 | | A | B | B | Fail | Comp. 20 |
| Sample 51 | Ag/Ni | Ni | 39.3 | | A | B | B | Fail | Comp. 20 Comp. 21 |
| Sample 52 | Ag/Zn | Zn | 60 | | A | B | B | Fail | Comp. 22 |
| Sample 53 | Ag/Cu | Cu | 37.9 | 50 µm | C | C | C | Pass | Comp. 23 |
| Sample 54 | | | | 5 nm | C | C | C | Pass | Comp. 24 |
| Sample 55 | | | | 1 nm | C | D | C | Pass | Comp. 25 |
| Sample 28 | Ag | - | - | 0.0 | C | D | D | Pass | Comp. 10 |

| | | | | | | | | | |
|---|---|---|---|---|---|---|---|---|---|
| Comp.: Comparative example | | | | | | | | | |

As is clear from results described in Table 2, it is confirmed that samples 29-40 (Present invention: Examples 19 - 30) each having a 5 nm- 50 µm thick layer therein made of a main group metal element or a transition metal element having a reflectance of 39% or more at a light wavelength of 320 nm, which is provided on the side opposite to the incident light side of a silver layer as specified in the present invention exhibit superior light resistance (regular reflectance stability) and superior weather resistance of the sticky adhesive layer (adhesiveness) to those of samples 41-46 as Comparative examples.

This is the result indicated by the fact that the sample of the present invention employs a reflection layer in which a main group metal element or a transition metal element having a reflectance of 39% or more at a wavelength of 320 nm is laminated on the side opposite to the incident light side of a silver layer as a 5 nm - 50 µm thick layer, whereby the foregoing main group metal element or transition metal element effectively reflects light having a wavelength of 290-330 nm, passing through the silver layer, and exposing the sticky adhesive layer to light in the same wavelength region as described above has been able to be effectively suppressed.

In contrast, in the case of samples 41-46 each as a Comparative example, a metal layer provided under the silver layer does not have a sufficient thickness, whereby the sticky adhesive layer is degraded because of transmission of light having a wavelength of 290-33 0 nm, and as a result, it presumably appears that light resistance (regular reflectance stability) and weather reflectance of the sticky adhesive layer (adhesiveness) are degraded.

Further, it is to be understood that high sulfidation resistance appears in the sulfidation resistance test when Al (aluminum) or Zn (zinc) is laminated on the side opposite to the incident light side of the silver layer.

Further, in the case of samples 47-52 each as a Comparative example, since the metal layer provided under the silver layer has a large thickness, resulting in generation of too large stiffness, it presumably appears that the film mirror for solar heat power generation has exhibited a poor roll-winding property.

### EXPLANATION OF NUMERALS

- 1: Hard coat layer
- 2: UV absorption layer
- 3: Adhesion layer
- 4: Corrosion inhibiting layer
- 5: Silver alloy reflection layer
- 6: Resin support layer
- 7: Sticky adhesive layer
- 8: Support
- 9: Silver reflection layer
- 10: Metal reflection layer

## Claims

1. A film mirror for solar heat power generation comprising:
a silver alloy reflection layer comprising silver as a main component, and a main group metal element or transition metal element having a reflectance of 39% or more at a light wavelength of 320 nm in an amount of 0.1 - 10% by weight; or a reflection layer comprising a silver layer and laminated on a side opposite to an incident light side of the silver layer, a 5-50 nm thick layer comprising a main group metal element or transition metal element having a reflectance of 39% or more at a light wavelength of 320 nm, the film mirror having a structure in which a support is attached onto a sticky adhesive layer provided on a side opposite to the incident light side of the silver alloy reflection layer or the reflection layer.

2. The film mirror of Claim 1,
wherein the main group metal element comprises Al.

3. The film mirror of Claim 1,
wherein the transition metal element comprises Ni, Rh, Pt or Zn.

4. The film mirror of Claim 2,
wherein the silver alloy reflection layer comprises an alloy of the Al and silver.

5. The film mirror of Claim 2,
wherein the reflection layer comprises a laminate in which an Al layer is laminated on a side opposite to the incident light side of the silver layer.

6. The film mirror of Claim 3,
wherein the silver alloy reflection layer comprises an alloy of silver and one selected from the group consisting of Ni, Rh, Pt, Cr and Zn.

7. The film mirror of Claim 3,
wherein the reflection layer comprises a laminate in which an Ni, Rh, Pt, Cr or Zn layer is laminated on a side opposite to the incident light side of the silver layer.

8. A method of manufacturing the film mirror of any one of Claims 1-7, comprising the step of:
forming a silver alloy reflection layer or a reflection layer via evaporation.

9. A reflection device for solar heat power generation comprising:
a metal support and
the film mirror of any one of Claims 1-7 provided on the metal support via the sticky adhesive layer.
